# EUROPEAN PATENT SPECIFICATION

(11) **EP 0 537 676 B1**
(45) Date of publication and mention of the grant of the patent: **06.03.1996**
(21) Application number: 92117456.1
(22) Date of filing: 13.10.1992
(51) Int. Cl.: A01K 89/01

(54) **Spinning reel for fishing**
Angelwinde
Moulinet de pêche

(30) Priority: 15.10.1991 JP 83467/91 U
(43) Date of publication of application: 21.04.1993
(73) Proprietor: DAIWA SEIKO INC., Higashikurume-shi, Tokyo (JP)
(72) Inventor: Kaneko, Kyoichi, c/o DAIWA SEIKO, INC., Higashikurume-shi, Tokyo (JP)
(74) Representative: Grünecker, Kinkeldey, Stockmair & Schwanhäusser Anwaltssozietät

(56) References cited:
- US-A- 2 963 238
- US-A- 4 921 188

## Description

### BACKGROUND OF THE INVENTION

The present invention relates to a spinning reel for fishing.

There has been proposed by the present applicant in the Japanese Utility Model Application No. Hei. 1-114031 (Kokai No. Hei. 3-54172) a spinning reel for fishing according to the precharacterising part of Claim 1, in which the supply of a fishline upon hit of the fish and the operation to meet the hitting of the fish can be ensured.

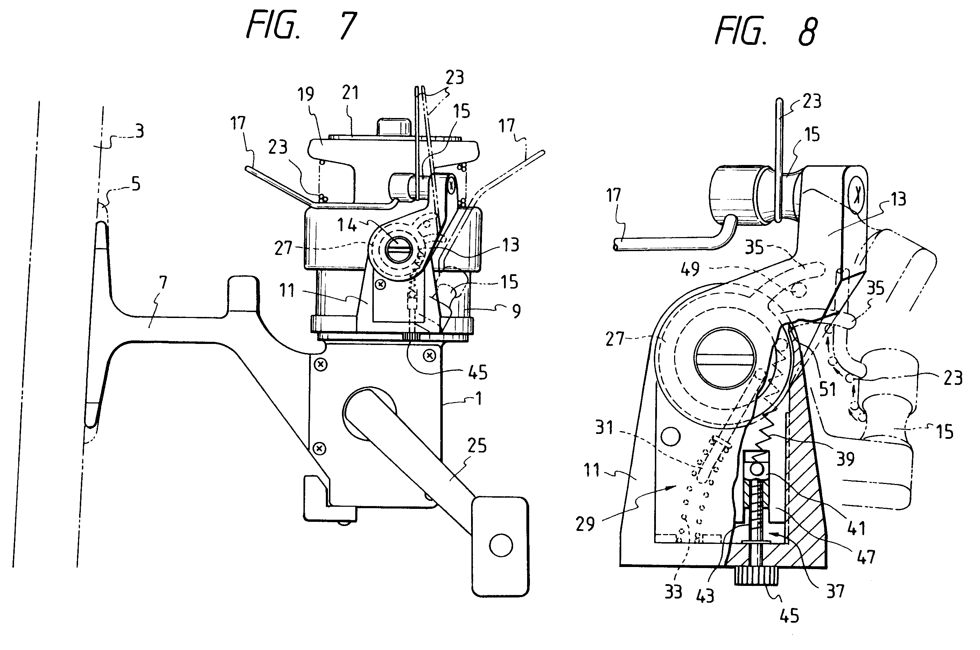

Fig. 7 shows an embodiment of such spinning reel. In the spinning reel, a reel main body 1 is mounted on the seat portions 5 of a fishing rod 3 through a leg portion 7. A rotor 9 is axially coupled to the front end of the reel main body 1 so as to be rotatable. A bail support arm 11 is integrally formed on the rotor 9. A bail supporting member 13 is rotatably mounted on the bail supporting arm 11 through a support shaft 14. A bail 17 is secured to the bail supporting member 13 through a line roller 15.

A spool 19 is provided at a front end of the reel main body 1 coaxially with the rotor 9. The spool 19 is rotatably supported on a spool shaft (not shown) which is mounted on the reel main body 1 so as to be reciprocally movable relative thereto. The spool 19 is frictionally coupled to the spool shaft by a drag device 21 provided at the front end portion of the spool 19. The frictionally coupling force (drag force) can be freely adjusted by the drag device 21. In addition, a fishline 23 is wound onto the spool 19.

Reference numeral 25 designates a handle for winding the fishline onto the spool 19 is rotatably provided in the reel main body 1. A rotation shaft (not shown) of this handle 25 cooperates with the rotor 9 through a well-known gear mechanism (not shown) which is provided in the reel main body 1. Further, the spool shaft cooperates with the rotating shaft of the handle 25 through a well-known reciprocating mechanism (not shown).

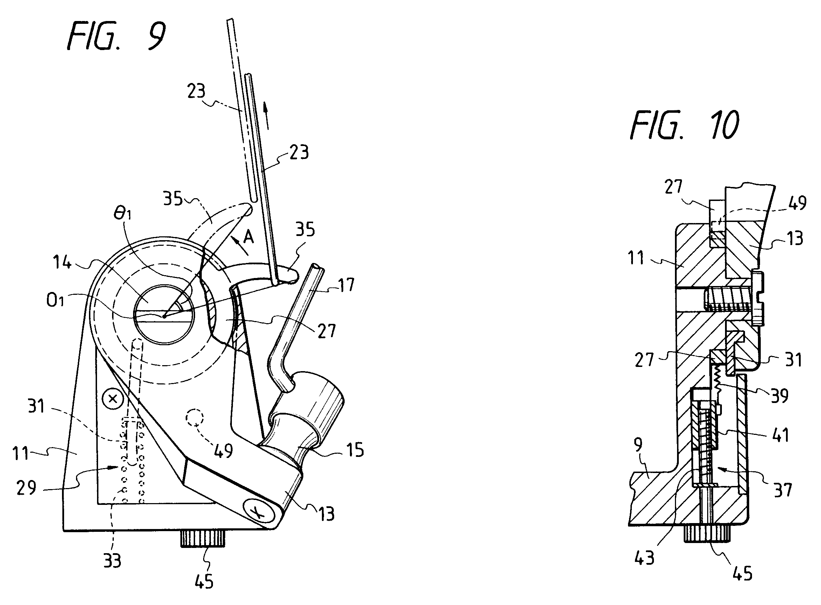

As shown in Figs. 8-10, an engaging member 27 is mounted coaxially with the bail supporting member 13 so as to freely rotate between the bail supporting member 13 and the bail supporting arm 11. The bail supporting member 13 is distribution-urged by a known type distribution-urging means 29 into its fishline winding position as illustrated in Fig. 8 and its fishline supply or delivery position as illustrated in Fig. 9. The distribution-urging means 29 is constructed by an actuating rod 31 and a coiled spring 33.

A fishline engaging portion 35 is formed on the outer circumference of the engaging member 27 for engaging the fishline 23 thereon when the bail supporting member 13 is located at its fishline supply position. The engaging member 27 is urged by an engaging member urging means 37 in the same direction as that of the rotation of the bail supporting member 13 toward its fishline supply position.

The engaging member urging means 37 comprises a spring 39, a slide member 41, a screw 43 and a knob 45. One end of the spring 39 is connected to the engaging member 27 while the other end thereof is connected to the slide member 41. The slide member 41 is freely movable and guided along a guide portion 47 formed in the bail supporting arms 11 as shown in Fig. 8. One end of the screw 43 is threadingly engaged with the slider 41. The other end of the screw 43 protrudes from the bail supporting arm 11 so that the knob 45 is fixed thereto.

A projection-like interlocking member 49 is formed on the bail supporting member 13 so as to protrude to the engaging member 23 side and interlock the engaging member 27 with the bail supporting member 13 during the motion of the bail support member toward its fishline winding position. Further, a retaining portion 51 is formed on the bail supporting arm 11. The retaining portion 51 functions as a retaining means for retaining the engagement member 27 at its fishline engaged position when the bail supporting member 13 is located at the fishline supply position.

In the fishing reel thus constructed, when pulling force caused in accordance with the hitting of fish is exerted onto the fishline 23 engaged on the fishline engaging portion 35 of the engagement member 27, under a state where the bail supporting member 13 is located at its fishline supply position, the engagement member 27 rotates in the direction for disengaging the fishline 23 from the fishline engaging portion 35 against the urging force of the engagement member urging means 37, so that the fishline 23 is disengaged from the engagement member 27.

Further, as shown in Fig. 9, after the engagement member 27 is rotated with angle θ₁ to a position where the fishline 23 is disengaged, the engagement member 27 is returned to its original position in accordance with the urging force of the engagement member urging means 37.

If the fish sufficiently bites at the bait, then the bail supporting member 13 is returned to its fishline winding position from its fishline supply position by the operation of the handle 25 through a reversing mechanism or by a direct manual operation. Then, the engagement member 27 is rotated in conjunction with the rotation of the bail supporting member 13 by the interlocking operation of the interlocking member 49 of the bail supporting member 13, so that the engagement member 27 is positioned at its fishline releasing position.

In the spinning reel constructed as mentioned above, when the pulling force of the fish biting at the bait of a device which is thrown into a prescribed point exceeds the urging force of the engagement member 27 which is predetermined by the engagement member urging means 37, the engagement member 27 is rotated in a direction shown by an arrow A with angle θ₁ to a position illustrated by an imaginary line in Fig. 9. Then, the fishline 23 is disengaged from the fishline engaging portion 35 of the engagement member 27, so that the fishline 23 is smoothly delivered to the pulling force of the fish. The fish can be, therefore, made to bite at the bait without making it feel unnatural force.

However, in the spinning reel for fishing as mentioned above, in the event that the fishline 23 is delivered by rotating the engagement member 27 about the support shaft 14, the fishline 23 engaged on the engaging portion 35 may slide on the engaging portion 35, resulting in that the fishline 23 is likely to be damaged.

Further, since the engagement member 27 and the bail support member 13 are supported on the same shaft, there arises a structural limitation to make it difficult to set proper operation angle and range for the engaging portion 35.
US-A-4,921,188 discloses a spinning reel for fishing having a bail support member with a bail pivotably disposed between a fishline supply position and a fishline winding position. A crank arm is pivotably connected to said bail support member and urged by means of a spring in the line releasing position. The shaft of said crank arm is separated from the shaft of said bail support member.

The present invention was made in view of the above deficiencies in the conventional spinning reel. Accordingly, it is an object of the present invention is to provide a spinning reel for fishing, in which the damage onto the fishline is effectively reduced and it is easy to set the operation angle and range for the engaging portion.

### SUMMARY OF THE INVENTION

In order to attain the above-noted object, the present invention provides a spinning reel for fishing as defined in Claim 1.

The spinning reel for fishing may further comprises an interconnecting means for retaining the fishline engagement member at a first position when the bail support member is located at the fishline supply position and for retaining the fishline engagement member at a second position when the bail support member is located at the fishline winding position.

In the spinning reel, the engagement member may be urged by a torsion spring wound around the second support shaft.

### BRIEF DESCRIPTION OF THE DRAWINGS

In the accompanying drawings:
Fig. 1 is a side view of a spinning reel according to a first embodiment of the present invention;
Fig. 2 is a side view showing the spinning reel of the first embodiment in a state where a bail support member is located at its fishline winding position;
Fig. 3 is a side view showing the spinning reel of the first embodiment in a state where the bail support member is located at its fishline supply position;
Fig. 4 is a cross-sectional view taken along line IV-IV in Fig. 2;
Fig. 5 is a explanatory view showing a difference between operation angles of an engagement member of the first embodiment and that of a conventional spinning reel for fishing;
Fig. 6 is a partially-sectioned side view showing a bail support arm of a second embodiment of the present invention;
Fig. 7 is a side view of the conventional spinning reel for fishing;
Fig. 8 is a side view showing the spinning reel in Fig. 7 in a state that a bail support member is located at its fishline winding position;
Fig. 9 is a side view showing the spinning reel in Fig. 7 in a state that the bail support member is located at its fishline supply position, and
Fig. 10 is a cross-sectional view of the bail support arm in Fig. 7.

### DETAILED DESCRIPTION OF THE PREFERRED EMBODIMENTS

A spinning reel for fishing according to an embodiment of the present invention will now be described in detail with reference to the drawings attached hereto. Since the basic construction of the spinning reel of the invention is similar to that of the above-mentioned conventional one, the explanation therefor is omitted hereunder. The portion related to the improvement is only described in detail hereafter. A part corresponding functionally to that in the conventional spinning reel is designated by the same reference numeral.

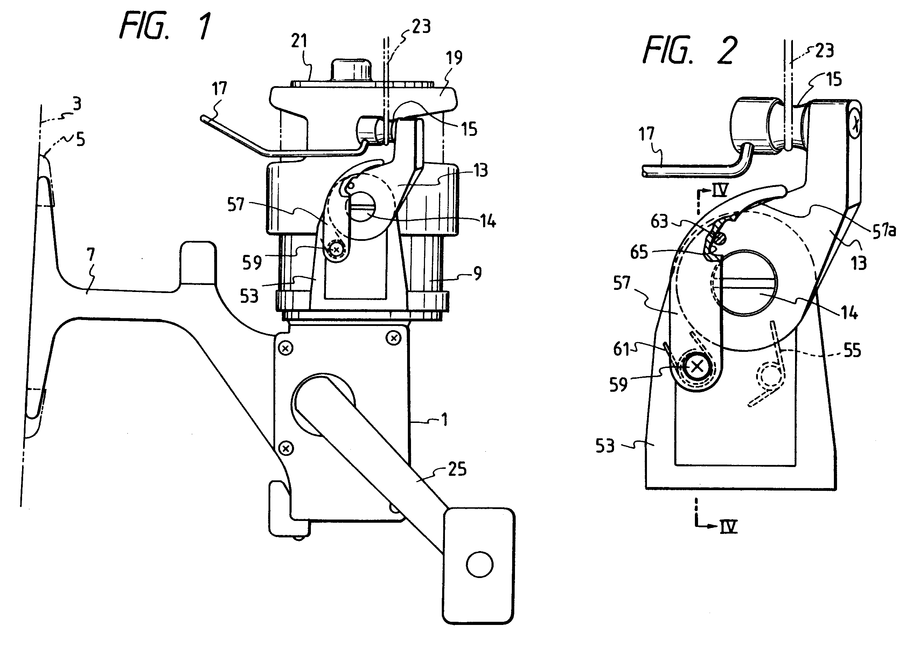

In Fig. 1, reference numeral 53 designates a bail support arm integrally formed on a rotor 9 as similarly to the conventional one. A bail support member 13 is rotatably mounted on the bail support arm 53 through a support shaft 14. A bail 17 is fixed onto the bail support member 13 through a line roller 15.

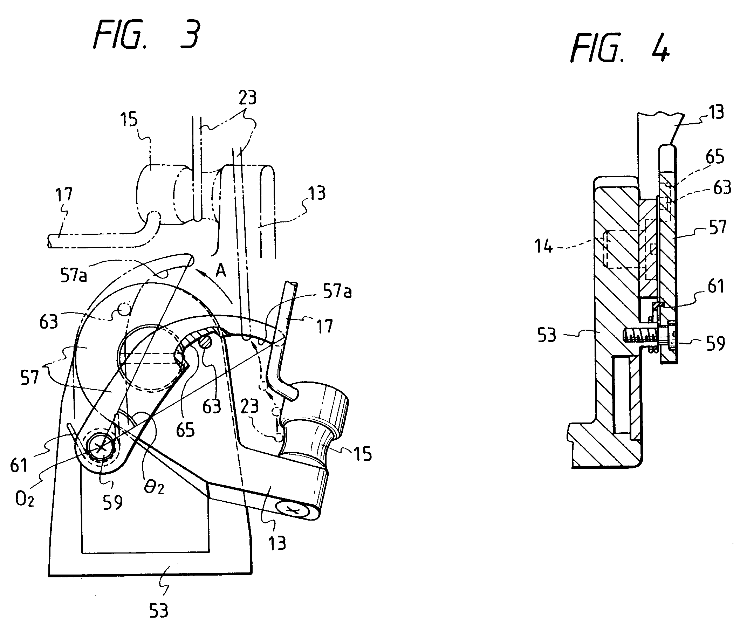

As shown in Fig. 2, the bail support member 13 is distribution-urged by well-known distribution-urging means comprising a torsion spring 55 assembled in the bail support arm 53 so as to be selectively urged to its fishline winding position shown in Fig. 2 and its fishline supply position shown in Fig. 3.

An engagement member 57 whose distal end is formed into an arcuate fishline engaging portion 57a is rotatably mounted onto the bail support arm 53 through a support shaft 59 in such a manner that the bail support member 13 is interposed between the bail support arm 53 and the engagement member 57 and the support shaft 59 is positioned rearward and downward relative the support shaft 14 as shown in Fig. 4. The fishline engaging portion 57a is designated to engage the fishline 23 thereon when the bail support member 13 is disposed at the fishline supply position as shown in Fig. 3. The engagement member 57 is urged by an engagement member urging means comprising a torsion spring 61 wound on the support shaft 59, so that the engagement member 57 is urged in the same direction as the rotation direction of the bail support member 13 toward its fishline supply position.

The bail support member 13 is formed with projection-like interconnecting means 63 as shown in Fig. 3. The interconnecting means 63 is projected from the bail support member 13 toward the engagement member 57 so as to cooperate the engagement member 57 with the bail support member 13 during motion of the bail support member 13 toward its fishline winding position. The interconnecting means 63 is also serves as retaining means for retaining the engagement member 57 at its fishline engagement position when the bail support member 13 is positioned at its fishline supply position as illustrated by a solid line in Fig. 3.

In Fig. 2, reference numeral 65 designates a notch provided in the engagement member 57, against which the interlocking means 63 abuts.

In the spinning reel for fishing constructed as mentioned above, when pulling force caused in accordance with the hitting of fish is exerted onto the fishline 23 engaged on the fishline engaging portion 57a of the engagement member 57, under a state where the bail supporting member 13 is located at the fishline supply position, the engagement member 57 rotates with angle θ₂ in the direction for disengaging the fishline 23 from the fishline engaging portion 57a against the urging force of the torsion spring 61, so that the fishline 23 is disengaged from the engagement member 57. Then, the engagement member 57 is returned to the original position by the urging force of the torsion spring 61.

If the fish sufficiently bites at the bait, then the bail supporting member 13 is returned to its fishline winding position from its fishline supply position through a reversing mechanism by the operation of the handle 25 or through a direct manual operation. During this operation, the engagement member 57 is interlocked with the bail supporting member 13 by the virtue of the interlocking member 63 of the bail supporting member 13 to be rotated with the bail support member 13, so that the engagement member 57 is positioned at its fishline releasing position.

Similarly to the conventional fishing reel shown in Fig. 7 or the like, in the spinning reel for fishing constructed as mentioned above, when the pulling force of the fish biting at the bait of a device which is thrown into a prescribed point exceeds the urging force of the engagement member 57 which is prescribed by the torsion spring 61, the engagement member 57 is rotated with an angle θ₂ in a direction shown by an arrow A in Fig. 3 to move to a position shown by an imaginary line in Fig. 3. Then, the fishline 23 is disengaged from the fishline engaging portion 57a of the engagement member 57, so that the fishline 23 is smoothly delivered to the pulling force of the fish. The fish can be, therefore, made to bite at the bait without making it feel unnatural force.

Further, the present invention produces an advantage in that the delivery of the fishline 23 is more smooth in comparison with that in the conventional spinning reel so that the damage onto the fishline 23 is effectively reduced. That is, as shown in Fig. 3, assuming that
O₁ designates a center of the support shaft 14 in the conventional spinning reel shown in Fig. 7;
O₂ designates a center of the support shaft 59 in the spinning reel according to the embodiment of the present invention;
B designates both a position where the fishline engaging portion 35 of the engaging member 27 of the conventional one is engaged with the fishline 23 under a state that the bail support member 13 is located at its fishline supply position and a position where the engagement portion 57a of the engagement member 57 of the embodiment is engaged with the fishline 23 in a state that the bail supporting member 13 is located at its fishline supply position; and
C designates both a position where the fishline 23 is disengaged from the fishline engagement portion 35 of the engagement member 27 and a position where the fishline 23 is disengaged from the engagement portion 57a of the engagement member 57,
if the pulling force caused in accordance with the hitting of the fish is exerted onto the fishline 23 engaged on the fishline engagement portion 35 in the conventional spinning reel, then the engagement member 27 is rotated about the center O₁ from B to C in the direction shown by an arrow A and the fishline 23 is disengaged from the fishline engagement portion 35 upon the rotation of the engagement member 27 with the angle θ₁.

On the contrary, in the present embodiment, if the pulling force is exerted onto the fishline engaged with the fishline engagement portion 57a, then the engagement member 57 is rotated about the center O₂ from B to C in the direction shown by the arrow A and the fishline 23 is disengaged from the fishline engagement portion 57a upon the rotation of the engagement member 57 with the angle θ₂. Accordingly, the operation angle θ₂ is less than the operation angle θ₁ of the conventional engagement member 27 (θ₁ > θ₂).

Therefore, in accordance with the present embodiment, it is possible to effectively reduce the abrasion onto the fishline 23 by the fishline engagement member caused during the motion of the fishline engagement member, so that the damage onto the fishline 23 can be reduced.

Further, in accordance with the present embodiment, the fishline 23 can be disengaged from the engagement portion 57a with the smaller operation angle θ₂ of the engagement member 57, the fishline 23 can be disengaged from the engagement portion 57a more smoothly in comparison with the conventional one, resulting in that the fishline 23 can be delivered to the pulling force of the fish and the fish can be made to bite at the bait without making it feel unnatural force. Accordingly, the fish readily bites at the bait without spitting out the bait in the middle of its biting.

Furthermore, in the spinning reel of the present embodiment, since the operation angle θ₂ of the engaging member 57 is less than the operation angle θ₁ in the conventional one, even if the curvature of the fishline engaging portion 57a is further increased to surely perform such an automatic fishline engaging operation that the fishline 23 on the line roller 15 is automatically transferred to the fishline engagement portion 57a in conjunction with the motion of the bail support member 13 from its fishline winding position to its fishline supply position, it is possible to increase the operation angle θ₂ slightly so as not to deteriorate the fishline disengaging operation of the engagement member 57.

In the conventional spinning reel, if the curvature of the fishline engaging portion 35 is increased in order to prevent the error of the automatic fishline engaging operation for the fishline 23, then the disengaging operation for the fishline 23 is deteriorated in a case where the operation angle θ₁ is not changed. Therefore, the operation angle θ₁ must be set larger value to smoothly disengage the fishline 23 from the engaging portion 35. However it is difficult to do so, because, generally, there is the structural limitation in the rotation angle of the bail supporting member 13 which rotation angle is closely related to that of the engagement member 27.

Therefore, in accordance with the present embodiment, it is possible to positively apply any modification to prevent the error of the automatic fishline engaging operation for the fishline 23 in comparison with the conventional spinning reel.

Further, in the conventional spinning reel, since the engagement member 27 and the bail supporting member 13 are supported by a common support shaft, the setting of the operation angle and operation range of the fishline engagement portion 35 is limited. However, the present invention does not suffer from this problem.

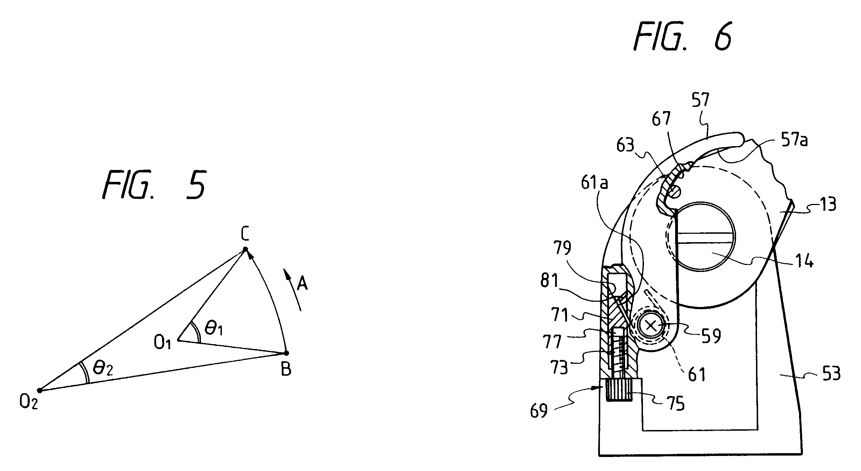

Fig. 6 shows a second embodiment of the present invention. In this embodiment, an engagement member urging force adjusting means 69 for adjusting the urging force of the torsion spring 61 is incorporated into the bail support arm 53.

As shown in Fig. 6, the engagement member urging force adjusting means 69 comprises a slider 71 and a thread member 73 and a knob 75.

The slider 71 is slidably guided along a guide portion 77 formed in the bail support arm 53, and one end of thread member 73 is threadingly engaged with the slider 71 as shown in Fig. 6. The other end of the thread member 73 projects from the bail support arm 53, and the knob 75 is fixed to this end. The slider 71 is designated to be moved upward and downward by rotationally operating the knob 75. The slider 71 is formed at its upper portion with a slope surface 79 against which one end side 61a of the torsion spring 61 abuts. Reference numeral 81 designates a guide groove formed on peripheral surface of the guide portion 77, the guide groove 81 guiding the one end of the torsion spring 61 therealong. In the event that the slider 71 is moved upward or downward by the rotational operation of the knob 75, the end of the torsion spring 61 is guided along the guide groove 81 so that the urging force of the torsion spring 61 is adjusted. Since the other arrangement is similar to that of the first embodiment mentioned above, detailed description therefor is omitted here.

This embodiment produces, in addition to the advantages of the first embodiment, another advantage in that since the slider 71 is guided along the guide portion 77 by rotating the knob 75 to adjust the tension of the spring 61, the tension can be easily, surely varied so as to set the urging force suitably in the best mode in accordance with kinds of the fish.

In this embodiment, the bail support member 13 is distribution-urged by the torsion spring 55 incorporated in the bail support arm 53 toward its fishline winding position and its fishline supply position. However, in stead of this arrangement, it is also applicable to distribution-urge the bail support member 13 by the distribution-urging means 29 shown in Fig. 8. Further, without using the distribution-urging arrangement, the bail support arm 13 may be urged only toward the fishline winding position side and the bail arm is interconnected with an engagement member which is moved in conjunction with the reversing mechanism.

Further, in each of the embodiments mentioned above, the interlocking member 63 serves also as retaining means for retaining the engagement member 57 at its fishline engagement position when the bail support member 13 is located at its fishline supply position, but the separate retaining means, e.g. a retaining portion 51 may be formed on the bail support arm 53 as shown in Fig. 8. The retaining portion may be provided on the outer surface of the bail support arm 53.

As mentioned above, according to the present invention, since the damage onto the fishline can be reduced more and fishline can be more smoothly delivered depending onto the pulling force of the fish in comparison with the conventional spinning reel, the fish can be made to bite at the bait without making it feel unnatural resistance, resulting in that the fish readily bites at the bait without spitting out the bait in the middle of its biting.

Further, in accordance with the present invention, an arrangement for preventing the automatic fishline engaging operation error can be more positively designated for the spinning reel in comparison with the conventional spinning reel, and the operation angle and the operation range of the fishline engagement portion can be set easily and properly.

## Claims

1. A spinning reel for fishing, in which a bail support member (13) with a bail (17) fixed thereon is mounted onto a rotor (9) through a first support shaft (14) so as to be pivoted between a fishline supply position and a fishline winding position, a rotatably mounted fishline engagement member (57),
and a spring (61) acting on the fishline engagement member (57) to urge the said engagement member (57) into a fishline engaging position, when the bail support member (13) is located at the fishline supply position,
the fishline engagement member serving to engage the fishline when the bail is moved into the fishline supply position and further serving to release the fishline as a result of tension applied thereto by a biting fish,
**characterized by**
the fishline engagement member (57) being rotatably mounted on the rotor (9) through a second shaft (59) separated from the first shaft (14).

2. The spinning reel for fishing according to claim 1, characterized by further comprising:
an interconnecting means (63) for retaining the fishline engagement member (57) at a first position when the bail support member (13) is located at the fishline supply position and for retaining the fishline engagement member (57) at a second position when the bail support member (13) is located at the fishline winding position.

3. The spinning reel for fishing according to claim 1 or 2, characterized in that the engagement member (57) is urged by a torsion spring (61) wound around the second support shaft (59).

4. The spinning reel for fishing according to claim 1 or 2, characterized by further comprising:
an urging force adjusting means (69) for adjusting an urging force applied to said fishline engagement member (57) as desired.

## Patentansprüche

1. Drehwinde zum Angeln, bei der ein Bügelstützelement (13) mit einem daran befestigten Bügel (17) auf einem Rotor (9) über eine erste Stützachse (14) angebracht ist, um zwischen einer Angelschnurzuführungsposition und einer Angelschnuraufwickelposition verschwenkt zu werden, wobei ein drehbar angebrachtes Angelschnur-Eingriffselement (57), und eine Feder (61), die auf das Angelschnur-Eingriffselement (57) wirkt, um das Eingriffselement (57) in eine Angelschnur-Eingriffsposition zu drücken, wenn das Bügelstützelement (13) in der Angelschnurzuführungsposition plaziert ist, und wobei das Angelschnur-Eingriffselement (57) dazu dient, mit der Angelschnur (23) in Eingriff befindlich zu sein, wenn der Bügel (17) in die Angelschnurzuführungsposition bewegt wird, und ferner dazu dient, die Angelschnur (23) als ein Ergebnis der Spannung, die durch einen beißenden Fisch daran aufgebracht wird, zu lösen, **dadurch gekennzeichnet,** daß
das Angelschnur-Eingriffselement (57) drehbar auf dem Rotor (9) über eine zweite Achse (59), die getrennt von der ersten Achse (14) ausgebildet ist, angebracht ist.

2. Drehwinde zum Angeln nach Anspruch 1, **dadurch gekennzeichnet**, daß diese ferner umfaßt:
eine Verbindungseinrichtung (63) zum Rückhalten des Angelschnur-Eingriffselementes (57) in einer ersten Position, wenn das Bügelstützelement 813) in der Angelschnurzuführungsposition plaziert ist und zum Zurückhalten des Angelschnur-Eingriffselementes (57) in einer zweiten Position, wenn das Bügelstützelement (13) in der Angelschnuraufwickelposition plaziert ist.

3. Drehwinde zum Angeln nach Anspruch 1 oder 2, **dadurch gekennzeichnet,** daß das Eingriffselement (57) durch eine Drehfeder (61) gedrückt wird, die um die zweite Stützachse (59) gewunden ist.

4. Drehwinde zum Angeln nach Anspruch 1 oder 2, ferner **gekennzeichnet durch**:
eine Druckkraft-Einstelleinrichtung (69) zum Einstellen einer Druckkraft, die auf das Angelschnur-Eingriffselement (57) in gewünschter Weise aufgebracht wird.

## Revendications

1. Moulinet de pêche, dans lequel un élément de support d'anse (13), avec une anse (17) fixée sur celui-ci, est installé sur un rotor (9) par l'intermédiaire d'une première tige de support (14), de façon à pivoter entre une position d'avance de ligne et une position d'enroulement de ligne, un élément d'enclenchement de ligne (57) installé de façon rotative et un ressort (61) agissant sur l'élément d'enclenchement de ligne pour pousser ledit élément d'enclenchement (57) dans une position d'enclenchement de ligne, lorsque l'élément de support d'anse (13) se trouve dans la position d'avance de ligne, l'élément d'enclenchement de la ligne servant à enclencher la ligne lorsque l'anse est déplacée dans la position d'avance de ligne et servant en outre à relâcher la ligne suite à une tension appliquée sur celle-ci par un poisson qui mord, caractérisé en ce que
l'élément d'enclenchement de ligne (57), installé de façon rotative sur le rotor (9) par l'intermédiaire d'une deuxième tige (59) séparée de la première tige (14).

2. Moulinet de pêche selon la revendication 1, caractérisé en ce qu'il comprend en outre: des moyens d'interconnexion (63) pour retenir l'élément d'enclenchement de ligne (57) dans une première position quand l'élément de support d'anse (13) se trouve dans la position d'avance de ligne, et pour retenir l'élément d'enclenchement de ligne (57) dans une deuxième position quand l'élément de support d'anse (13) se trouve dans la position d'enroulement de ligne.

3. Moulinet de pêche selon la revendication 1 ou 2, caractérisé en ce que l'élément d'enclenchement (57) est poussé par un ressort de torsion (61) enroulé autour de la deuxième tige de support (59).

4. Moulinet de pêche selon la revendication 1 ou 2, caractérisé en ce qu'il comprend en outre:
des moyens de réglage de force de poussée (69) pour régler une force de poussée appliquée audit élément d'enclenchement de ligne (57) comme souhaité.
